# EUROPEAN PATENT SPECIFICATION

(11) **EP 2 441 988 B1**
(45) Date of publication and mention of the grant of the patent: **21.08.2013**
(21) Application number: 10733018.5
(22) Date of filing: 09.06.2010
(51) Int. Cl.: F16K 27/02, F16K 1/20, B08B 9/02, B08B 1/04

(54) **DEVICE FOR REGULATING THE FLOW OF MATERIALS INTO AN ENCLOSURE OR CONDUIT AND A SYSTEM AND APPARATUS INCLUDING SAID DEVICE**
DISPOSITIVO PARA REGULAR EL PASO DE MATERIALES A UN RECINTO O CONDUCTO, Y SISTEMA Y APARATO QUE COMPRENDEN DICHO DISPOSITIVO
DISPOSITIF DESTINÉ À RÉGULER LE PASSAGE DE MATÉRIAUX DANS UNE ENCEINTE OU UN CONDUIT, ET SYSTÈME ET APPAREIL COMPRENANT CE DISPOSITIF

(30) Priority: 10.06.2009 ES 200901399
(43) Date of publication of application: 18.04.2012
(73) Proprietor: Ambiensys, S.L., 08210 Barbera Del Valles (ES)
(72) Inventor: LEON TOMAS, Carlos, E-08172 Sant Cugat del Valles (ES); RAGULL AVILES, Javier, E-08222 Terrassa - Barcelona (ES); CARRILLO MUÑOZ, Luis Carlos, E-08210 Barbera del Valles - Barcelona (ES); SALVATIERRA ROBERT, Maria Dolors, E-08210 Barbera del Valles - Barcelona (ES); BERTRAL GOSCH, Jaime, E-08210 Barbera del Valles - Barcelona (ES); NUÑEZ BODELON, Angel Manuel, E-08758 Cervello - Barcelona (ES)
(74) Representative: Sugrañes Patentes y Marcas
(86) International application number: PCT/ES2010/070388
(87) International publication number: WO 2010/142835

(56) References cited:
- EP-A1- 1 103 492
- EP-A2- 1 845 292
- JP-A- 58 024 671
- JP-U- 63 166 766
- US-A- 3 380 475
- US-A- 3 570 510
- US-A- 4 498 492
- US-A- 4 671 310
- US-A- 5 139 048
- US-A- 5 284 182
- US-A- 5 711 341

## Description

### Technical Field of the Invention

The present invention relates to a device for regulating the passage of materials to an enclosure or conduit, particularly suitable for adherent or tacky materials, such as, for example, pasty materials used in the manufacture of paper, solid urban waste and assimilable industrial waste, etc.

The mentioned device for regulating the passage of materials is of the type comprising a main hollow body provided with an upper opening and a lower opening, the upper opening constituting an access hole susceptible of being covered by a locking cover; and a swinging locking cover, susceptible of adopting a closed position, covering the access hole, and an open position, the cover being swung onto one of the inner walls of the main body, an inner face being distinguished in the cover, said inner face oriented toward the inside of the main body when the cover adopts the closed position, and an outer face, opposite the previous one.

The invention is also comprised within the technical sector of systems for introducing and extracting materials, particularly solid urban waste or assimilable industrial waste, from inside a pressure tank or autoclave, as well as in the area of apparatuses for the treatment of said waste, provided with a pressure tank inside which the waste is subjected to pressure and temperature conditions that are greater than atmospheric conditions and is conveyed from an upper inlet opening to a lower outlet opening of the pressure tank.

### Background of the Invention

Known devices used for regulating the passage of materials through a duct or the like, of the type comprising a pivoting cover, have certain drawbacks when the material circulating therethrough is tacky or tends to remain adhered both to the cover and to the walls of the main hollow body supporting the cover. This situation can lead, for example, to the cover to not correctly adopting its closure position, to a leak-tight closure not being thus formed and to not being able to assure the cut-off of the flow of material through the device.

In the treatment of solid urban waste or household waste and industrial waste, it is common to sterilize and partially dry said waste in order to transform its organic fraction into a homogenized byproduct, which facilitates its subsequent separation and recovery by means of circuits for recycling and/or utilization for energy purposes. The nature of this waste precisely brings about its tendency to remain adhered to the walls of the vessels containing it, so the means used to handle it must adjust to or be prepared so that this effect does not alter their working. This is the case of systems for introducing and extracting waste in a sanitation apparatus.

A known type of apparatus in which said sanitation treatment is carried out comprises a fixed vessel or pressure tank inside which there are arranged means for conveying the waste from an inlet end towards an outlet end. These vessels are provided at the inlet end with an upper opening and at the outlet end with a lower opening, provided with respective closure systems which allow sealing the vessel by means of pivoting covers, through which the waste to be treated is introduced and extracted once it is treated, respectively, generally by the effect of gravity.

When the pressure and the temperature inside the vessel reach the desired values, the pressure and temperature conditions are kept essentially constant therein while the waste is successively introduced by batches into the vessel and conveyed therein until it is extracted, also by batches and as it reaches the outlet end of the vessel, the sanitation of the waste *per se* being performed during its dwell time in the vessel, as described, for example, in patent document WO2008065002.

Each of the mentioned closure systems comprises a compression or decompression chamber for the waste provided with respective pivoting covers for opening and closing corresponding inlet and outlet openings of the chamber, one of which communicates with the inside of the vessel. When waste is introduced or extracted, the chambers temporarily house a batch of waste to be treated or treated waste, as the case may be, while it is compressed or decompressed, the covers being used to regulate introducing the waste in the chambers, for containing it and for subsequently extracting it. Until now, satisfactory solutions for solving the problem of the waste remaining adhered to the closure covers of the aforementioned chambers have been unknown.

Document JP03182258 discloses an apparatus for breaking down, disinfecting and sterilizing contaminated waste which connects a loading opening with a pressure seal mechanism. In the apparatus, an infectious organic and/or moist substance can be supplied on one hand to a chamber through a first cover that is open, or the organic substance can be directly supplied on the other hand to an autoclave through a lower chamber and a channel by means of another cover. Since a rotational mechanism is active, the chamber is positioned in the lower part of the mentioned covers, i.e., providing passage to the loading openings, to repeat the supply. The organic substance falls vertically into the autoclave and receives the action of a stirring mechanism. In such case, the infectious organic and/or moist substance or the water is stopped by a pressure seal device, to prevent it from being outwardly injected. The covers are closed while the material is sterilized in the autoclave and the pressure seal device is in pressure sealing conditions, so the system is disinfected and sterilized by vapor treatment. The residues that may have been deposited in the channel or in another part are removed by means of a ring provided with cleaning nozzles, through which a pressurized fluid is expelled.

Although in the previous case the use of cleaning nozzles for cleaning the channel or conduit has been provided, this solution is not always as effective when waste or materials of a different nature are being treated because some can present greater resistance to being entrained by the liquid coming out of the nozzles, especially if they are particularly adherent and/or tacky materials or waste.

Document JP58024671-A discloses a device for regulating the passage of materials to an enclosure or conduit, which comprises a hollow main body, a valve casing, provided with an upper opening and with a lower opening, the upper opening constituting an access hole susceptible of being covered by a swinging locking cover which is able to adopt a closed position, covering the access hole, and an open position. Said device comprises cleaning means in the form of an elongate scrape-off member slidable on the surface of the valve seat of the locking cover to clean it, being such member linked to the mechanism for the swinging of said cover in order to slide when the cover is being closed. Particularly, when a valve spindle is turned counterclockwise by an appropriate drive means in order to close the cover from its fully open position, the cover is gradually swung upward through an arm. At the same time, a guide lever secured on a guide shaft interlocked with the valve spindle is swung in the same direction so that a pair of rollers of the scrape-off member fitted at one end in a slender groove of the lever move on the reverse side of the cover to scrape off garbage or the like from the surface of its valve seat. A coupling lever is moved up by the swing of the guide lever so that another scrape-off member connected to the tip of the coupling lever slides with rollers on a guide flange to scrape off garbage or the like from the surface of the valve seat' of a valve casing.

This solution is not always as effective when waste or materials of a different nature are being treated because some can present greater resistance to being scraped off by the elongate scrape-off member and the cover needs to be open and closed several times to remove the waste or materials adhered to the cover, especially if they are particularly adherent and/or tacky materials or waste.

Furthermore, the need to provide a solution for cleaning the closure covers that is compatible with maintaining the pressure and temperature conditions inside the vessel is clear.

Another objective is to provide a cleaning solution that can be adapted to the already existing treatment vessels and which therefore involves the least number of modifications, and alternatively, to get the apparatus for waste treatment to be simpler and/or to reduce the manufacturing costs compared with known apparatuses.

### Disclosure of the Invention

For the purpose of providing a solution to the problems raised, a device for regulating the passage of materials to an enclosure or conduit, particularly suitable for adherent or tacky materials, is disclosed. The mentioned device comprises:
- a main hollow body provided with an upper opening and with a lower opening, the upper opening constituting an access hole susceptible of being covered by a locking cover;
- a swinging locking cover, susceptible of adopting a closed position, covering the access hole, and an open position, the cover being swung onto one of the inner walls of the main body, an inner face being distinguished in the cover, said inner face oriented towards the inside of the main body when the cover adopts the closed position, and an outer face, opposite the previous one; and
- a first cleaning means for the outer face of the cover.

Essentially, the device according to the invention is characterized in that the first cleaning means comprises a rotating cleaning disc shiftable between an inoperative position, in which it allows the passage of materials through the main body, and an operative cleaning position, in which the disc is juxtaposed to the outer face of the cover when the latter adopts the open position, the cleaning disc being provided with scraping members intended for removing by friction the material residues that may have adhered to the outer face of the cover when the cleaning disc adopts the operative position and rotates about the shaft of the cleaning disc.

The scraping members are preferably formed by one or more wedge-shaped bodies the bases of which are arranged on the face of the cleaning disc oriented towards the outer face of the cover, the wedges being located tangent to the contour of the mentioned face of the cleaning disc.

According to another feature of the invention, the scraping members are made of gunmetal. Particularly, the gunmetal typically contains between 10% and 8% tin, and the gunmetal of the scraping members is a Standard bronze according to the C-3220 UNE37103 standard.

According to another feature of the invention, the first cleaning means comprise an operating rod of the cleaning disc, attached to the rear face of the latter and coupled to the output shaft of a rotary motor through a magnetic coupling, all configured such that the rod is longitudinally shiftable between a first position, in which the cleaning disc adopts the inoperative position, and a second position, in which the cleaning disc adopts the operative position, and vice versa, and transmits a rotational movement to the cleaning disc as the rotary motor is operated.

According to another feature of the invention, the device for regulating the passage of materials to an enclosure or conduit comprises pivoting means arranged after the access hole by means of which the cover is hingedly attached to the inside of the main body, said pivoting means being made up of an arm the first end of which is hingedly attached to the main body and the second end of which is attached to the inner face of the cover, the cover being susceptible of pivoting about the first end of the arm in order to go from the open position to the closed position and vice versa, as the arm rotates about its hinged attachment with the main body.

According to another feature of the invention, the main body is provided in one of its inner walls and under the access hole with a housing suitable for housing the cover when the latter adopts the open position.

According to another feature, the device of the invention comprises second cleaning means for cleaning the material residues that can accumulate in the housing of the inner wall of the main body, the mentioned second cleaning means being made up of a rigid body arranged at the bottom of the housing and shiftable, by pushing means, from the bottom of the housing to the projection of the lower opening of the main body, entraining in its movement the material residues accumulated in the mentioned housing.

According to another feature of the invention, the device is provided with at least one retaining body, sinkable behind the inner surface of the wall of the main body, operable by corresponding operating means shifting it from an extended position, in which it projects from the inner surface of said wall to retain the cover in the closed position, to a sunken position, in which the mentioned retaining body is completely or partially concealed behind the inner surface of the wall of the main body, to release the cover from its closed position.

According to another aspect of the invention, a system for introducing and extracting materials, particularly solid urban waste or assimilable industrial waste, from inside a pressure tank or autoclave is disclosed. Said system is characterized in that it comprises at least two devices like the one of the invention described above arranged superimposed and connected to one another by means of a tubular element, the open upper end of the tubular element being coupled to the lower opening of the upper device, and the open lower end of the tubular element to the access hole of the lower device, the covers of the mentioned devices determining a leak-tight chamber inside which the housed materials can be pressurized or depressurized before being introduced in the tank or expelled to the exterior, respectively, by means of opening the locking cover of the lower device.

Finally, according to another aspect of the invention an apparatus for waste treatment, particularly for solid urban waste and assimilable industrial waste, is also disclosed, provided with a pressure tank inside which the waste is subjected to pressure and temperature conditions that are greater than atmospheric conditions, and is conveyed from an upper inlet opening to a lower outlet opening of the pressure tank. Essentially, the apparatus for waste treatment is characterized in that it is provided with two systems such as those described in the previous paragraph for introducing and extracting the waste to be treated and the treated waste, respectively, the lower opening of the lower device of the first system being connected to the upper inlet opening of the pressure tank and the upper opening of the upper device of the second system connected to the lower outlet opening of the pressure tank.

### Brief Description of the Drawings

The attached drawings show by way of non-limiting example a preferred embodiment of the device for regulating the passage of materials to an enclosure or conduit, and of the system for introducing and extracting materials. In said drawings:
Figure 1 is an elevational view of a pressure tank of the type provided in the apparatus for waste treatment object of the invention;
Figure 2 is a perspective view of the device for regulating the passage of materials to an enclosure or conduit object of the invention;
Figures 3, 4 and 5 are sectional views of the device of Figure 2 in successive steps for closing, opening and cleaning of the cover;
Figure 6 is a longitudinally sectioned perspective view of the device shown in Figure 3;
Figure 7 is a perspective view of the system for introducing materials object of the invention comprising two devices such as the one in Figure 2; and Figure 8 is a sectional view of the system shown in Figure 7.

### Detailed Description of the Drawings

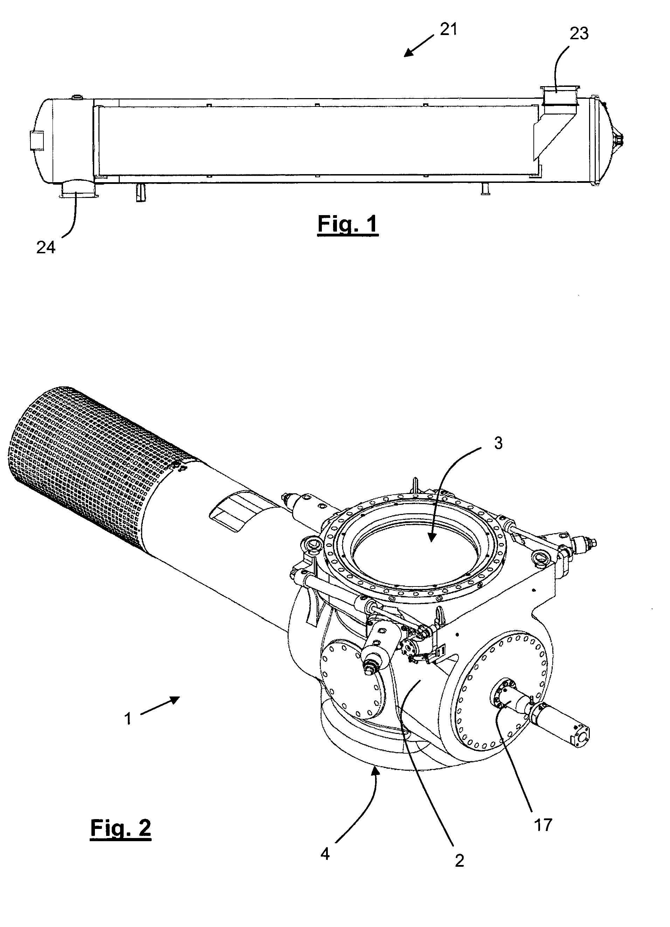

The apparatuses used for waste treatment, particularly for solid urban waste and assimilable solid waste, such as paperboards, office waste and industrial process byproducts such as slaughterhouse, vegetable plantation, composting plant waste, etc. are mainly provided with a pressure tank 21, such as the one depicted in Figure 1. At the longitudinal ends of said pressure tank 21 respective upper inlet opening 23 for the waste to be treated and lower outlet opening 24 for the already treated waste are arranged and inside said tank 21 the waste is subjected for a predetermined time period to pressure and temperature conditions according to its composition. Means for conveying, shaking and/or stirring the waste introduced from the upper inlet opening 23 to the lower outlet opening 24 are arranged inside the pressure tank 21.

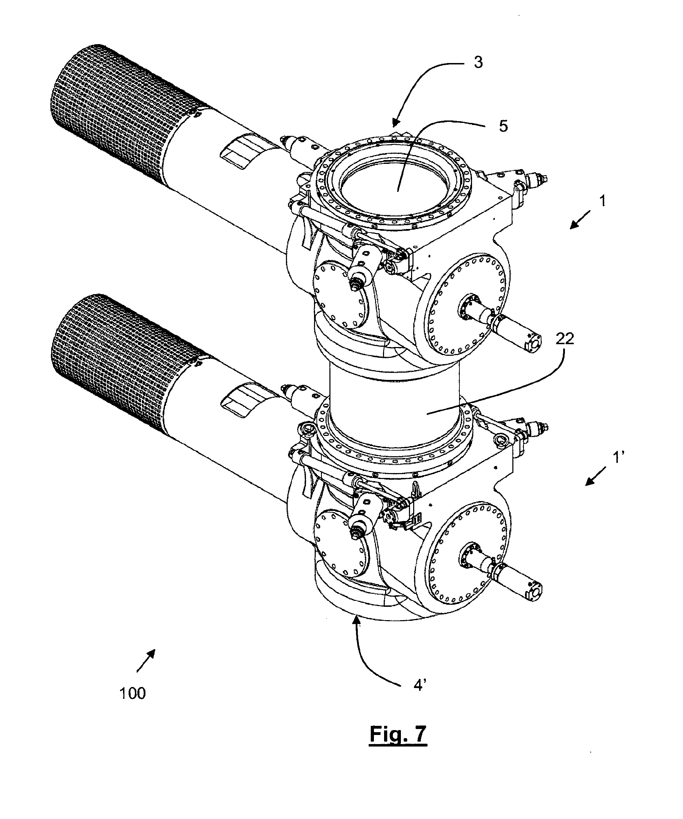

The apparatus for waste treatment object of the invention is provided with two systems 100 for introducing and extracting the waste to be treated and the treated waste, respectively. Figure 7 shows the system 100 for introducing the waste to be treated, although it could also correspond to the system 100 for extracting the treated waste because they have the same design.

As can be seen in Figure 7, the system 100 is in turn formed by two identical devices 1 and 1', arranged superimposed and connected to one another by means of a tubular element 22. The device 1 is the one shown in Figures 2 to 6 and serves for regulating the passage of materials to an enclosure or conduit, said device 1 being particularly suitable for adherent or tacky materials, such as, for example, solid urban waste, assimilable industrial waste or materials forming paper pulp for manufacturing paper.

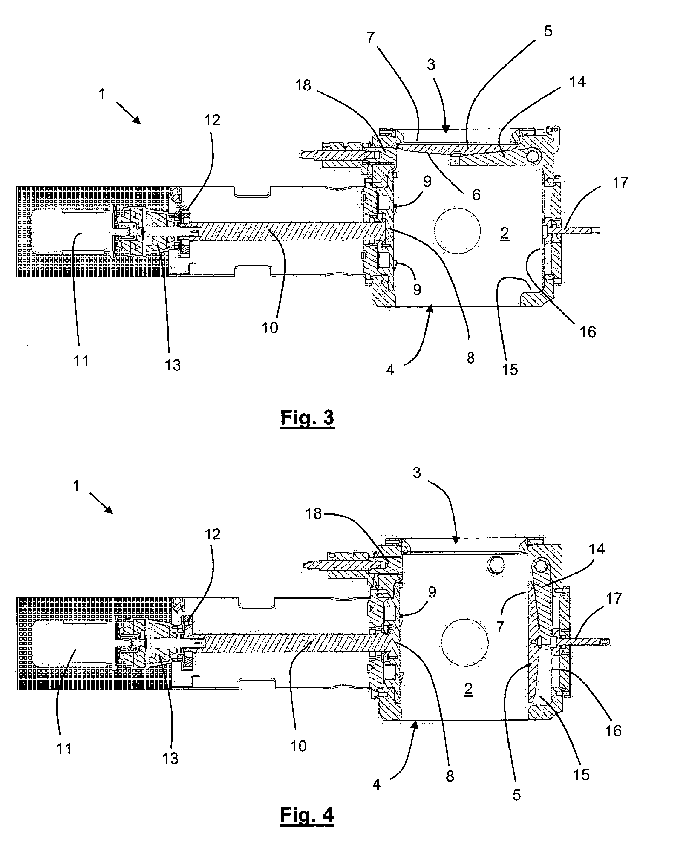

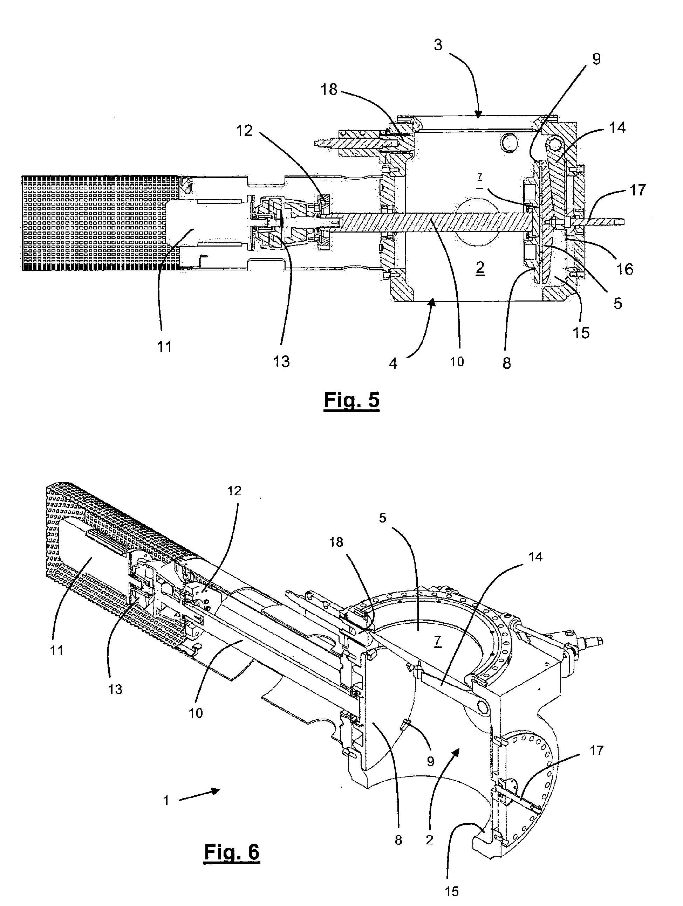

The device 1 comprises a hollow main body 2 provided with an upper opening or access hole 3 and with a lower opening 4. As can be observed in Figures 3 and 6, the access hole 3 is covered by a swinging locking cover 5. Said locking cover 5 can adopt a closed position (see Figure 3), covering the access hole 3, and an open position (see Figures 4 and 5) in which the cover 5 is swung onto one of the inner walls of the main body 2. Hereinafter, the inner face 6 of the cover 5 will be the face that is oriented towards the inside of the main body 2 when the cover 5 is in the closed position, and the outer face 7 of the cover 5 will be the opposite face.

As is shown in Figures 3 to 6, the device 1 comprises pivoting means arranged after the access hole 3 by means of which the cover 5 is hingedly attached to the inside of the main body 2. The pivoting means are formed by an arm 14 the first end of which is hingedly attached to the main body 2 and the second end of which is attached by means of a ball joint to the center of the inner face 6 of the cover 5. When the arm 14 rotates about its hinged attachment with the main body 2, the cover 5 can pivot about the first end of the arm 14 in order to go from the open position to the closed position and vice versa.

The device 1 is also provided with at least one retaining body 18, sinkable behind the inner surface of the wall of the main body 2 (see Figures 3 to 6), which is activated by means of corresponding operating means (not depicted) shifting it from an extended position to a sunken position. In the extended position the retaining body 18 projects from the inner surface of the mentioned wall to retain the cover 5 in the closed position, whereas in the sunken position the retaining body 18 is completely or partially concealed behind the inner surface of the wall of the main body 2 to release the cover 5 from its closed position.

In Figures 3 to 6, it can be seen that the device 1 comprises first cleaning means for the outer face 7 of the cover 5, formed by a rotating cleaning disc 8 shiftable between an inoperative position and an operative cleaning position, depicted in Figures 4 and 5, respectively. The cleaning disc 8 is provided with scraping members 9 which remove the material residues that may have adhered to the outer face 7 of the cover 5 when the cleaning disc 8 is in the operative cleaning position as it rotates about its shaft.

It can be seen in detail in Figure 6 that scraping members 9 are formed by several wedge-shaped bodies. Said wedges are located tangent to the contour of the face of the cleaning disc 8 which is oriented towards the outer face 7 of the cover 5 when the latter is in the open position (Figures 4 and 5). The scraping members 9 are made of standard bronze according to the C-3220 UNE37103 standard, particularly of the type known as gunmetal, which generally contains between 10% and 8% tin. As the cleaning disc 8 rotates about its shaft in the axial direction of the rod 10 (see Figures 3 to 6), the scraping members 9 remove the dirt accumulated on the outer face 7 of the cover 5 when it is juxtaposed to the latter (see Figure 5).

In order for the cleaning disc 8 to be able to shift from the rest or inoperative position (see Figures 3 and 4), in which it allows the passage of materials through the main body 2, until accessing the outer face 7 of the cover 5 when the latter is in the open position, swung onto one of the inner walls of the main body 2, the rear face of the cleaning disc 8 is coupled to an operating rod 10 in turn coupled to the output shaft of a rotary motor 11 through a magnetic coupling 12. The rotary motor 11 comprises a frequency shifter 13 for being able to vary the rotational speed of the cleaning disc 8 according to the amount of waste and the nature thereof that may have accumulated on the outer face 7 of the cover 5.

In relation to the main body 2, in Figures 3 to 6 show that said main body 2 is provided on one of its inner walls and under the access hole 3 with a housing 15 suitable for housing the cover 5 when the latter adopts the open position. Residues of the materials to be treated can also accumulate in this housing 15 so second cleaning means made up of a rigid body 16 arranged at the bottom of the housing 15 and shiftable have also been provided in the device 1. The rigid body 16, with fine thickness, is shiftable from the bottom of the housing 15 to the projection of the lower opening 4 of the main body 2 by pushing means 17, such that when said pushing means 17 are activated, the rigid body entrains in its movement the residues accumulated in said housing 15.

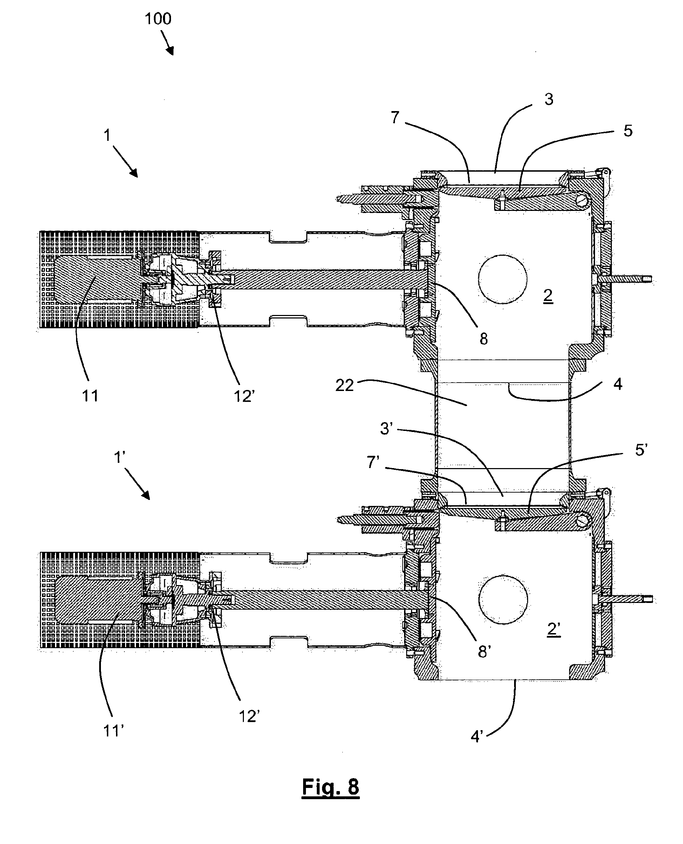

As mentioned at the beginning, Figures 7 and 8 depict a system 100 for introducing materials, particularly solid urban waste or assimilable industrial waste, through the upper inlet 23, inside a pressure tank 21 such as the one of Figure 1 and it can be seen that said system 100 is formed by two devices 1 and 1' such as those described above. The two devices 1 and 1' are superimposed and connected to one another by means of a tubular element 22. The open upper end of the tubular element 22 is connected to the lower opening 4 of the upper device 1, whereas the open lower end of the tubular element 22 is connected to the access hole 3' of the lower device 1'. The space between the covers 5 and 5' of the mentioned devices 1 and 1' thus determines a leak-tight chamber inside which the housed materials can be pressurized or depressurized before being introduced in the tank 21 by means of opening the closure cover 5' of the lower device 1'.

For introducing the materials or waste inside the pressure tank 21, the first cover 5 adopts the open position while the second cover 5' remains in the closed position. Once the waste is loaded, the first cover 5 is closed, the waste to be treated being confined in the leak-tight chamber determined by the space between said covers 5 and 5'. It must be taken into account that the leak-tight chamber must be pressurized in order to reach the same pressure and temperature conditions as inside the pressure tank 21, for the purpose of allowing continuous working of the apparatus for waste treatment, minimizing energy losses.

Once the leak-tight chamber is pressurized, the cover 5' will adopt the open position, allowing the waste or materials to be treated to pass into the pressure tank 21 where they will be conveyed and treated from the upper inlet 23 to the lower outlet 24.

In turn, a system 100 for extracting the already treated waste is arranged in the apparatus for waste treatment, particularly at the lower outlet 24 of the pressure tank 21. In this case, the leak-tight chamber determined by both covers 5 and 5' must be pressurized before the lower cover 5' goes to the open position for discharging the already treated waste outside the apparatus. Thus, in the first phase for the exit of the already treated waste, the cover 5 will be in the open position and the cover 5' in the closed position, such that the already treated waste accumulates on the cover 5'. Since the cover 5 is in the open position, the treated waste that is gradually accumulated will be under the same pressure and temperature conditions as inside the pressure tank 21. In a second phase, the cover 5 will be closed and the treated waste will be confined in the leak-tight chamber determined by the space between both covers 5 and 5'. Said chamber will be depressurized during said confinement until equalizing the conditions with the conditions outside the treatment apparatus. Once depressurized, the cover 5' will be opened and the waste will be discharged to the exterior.

## Claims

1. A device (1) for regulating the passage of materials to an enclosure or conduit, especially suitable for adherent or tacky materials, comprising:
- a hollow main body (2) provided with an upper opening and with a lower opening (4), the upper opening constituting an access hole (3) susceptible of being covered by a locking cover (5);
- a swinging locking cover, susceptible of adopting a closed position, covering the access hole, and an open position, the cover being swung onto one of the inner walls of the main body, an inner face (6) being distinguished in the cover, said inner face (6) oriented towards the inside of the main body when the cover adopts the closed position, and an outer face (7), opposite the previous one; and
- first cleaning means (8) for the outer face (7) of the cover (5); whereby the first cleaning means (8) is (8) shiftable between an inoperative position, in which it allows the passage of materials through the main body (2), and an operative cleaning position, in which the first cleaning means (8) is juxtaposed to the outer face (7) of the cover (5), the cleaning means (8) being provided with scraping members (9) intended for removing by friction the material residues that may have adhered to the outer face (7) of the cover (5) when the cleaning means (8) adopts the operative position and rotates about the shaft of the cleaning means (8); **characterized in that** the first cleaning means comprises a rotating cleaning disc that is in the operative cleaning position when the cover (5) adopts the open position.

2. - The device (1) according to the previous claim, **characterized in that** the scraping members (9) are formed by one or more wedge-shaped bodies the bases of which are arranged on the face of the cleaning disc (8) oriented towards the outer face (7) of the cover (5), the wedges being located tangent to the contour of the mentioned face of the cleaning disc.

3. - The device (1) according to claim 1 or 2, **characterized in that** the scraping members (9) are made of gunmetal.

4. - The device (1) according to any one of the previous claims, **characterized in that** the first cleaning means comprise an operating rod (10) of the cleaning disc (8), attached to the rear face of the latter and coupled to the output shaft of a rotary motor (11) through a magnetic coupling (12), all configured such that the rod is longitudinally shiftable between a first position, in which the cleaning disc adopts the inoperative position, and a second position, in which the cleaning disc adopts the operative position, and vice versa, and transmits a rotational movement to the cleaning disc as the rotary motor is operated.

5. - The device (1) according to any one of the previous claims, **characterized in that** it comprises pivoting means arranged after the access hole (3) by means of which the cover (5) is hingedly attached to the inside of the main body (2), said pivoting means being made up of an arm (14) the first end of which is hingedly attached to the main body and the second end of which is attached to the inner face of the cover, the cover being susceptible of pivoting about the first end of the arm in order to go from the open position to the closed position and vice versa, as the arm rotates about its hinged attachment with the main body.

6. - The device (1) according to any one of the previous claims, **characterized in that** the main body (2) is provided in one of its inner walls and under the access hole with a housing (15) suitable for housing the cover (5) when the latter adopts the open position.

7. - The device (1) according to claim 7, **characterized in that** it comprises second cleaning means for cleaning the material residues that can accumulate in the housing (15) of the inner wall of the main body (2), the mentioned second cleaning means being made up of a rigid body (16) arranged at the bottom of the housing and shiftable, by pushing means (17), from the bottom of the housing to the projection of the lower opening (4) of the main body, entraining in its movement the material residues accumulated in the mentioned housing.

8. - The device (1) according to any one of the previous claims, **characterized in that** is provided with at least one retaining body (18), sinkable behind the inner surface of the wall of the main body (2), operable by corresponding operating means shifting it from an extended position, in which it projects from the inner surface of said wall to retain the cover in the closed position, to a sunken position, in which the mentioned retaining body is completely or partially concealed behind the inner surface of the wall of the main body, to release the cover (5) from its closed position.

9. - A system (100) for introducing and extracting materials, particularly solid urban waste or assimilable industrial waste, from inside a pressure tank (21) or autoclave, **characterized in that** it comprises at least two devices (1, 1') according to any one of claims 1 to 8 arranged superimposed and connected to one another by means of a tubular element (22), the open upper end of the tubular element being coupled to the lower opening (4) of the upper device (1), and the open lower end of the tubular element to the access hole (3') of the lower device (1'), the covers (5, 5') of the mentioned devices determining a leak-tight chamber inside which the housed materials can be pressurized or depressurized before being introduced in the tank or expelled to the exterior, respectively, by means of opening the locking cover of the lower device.

10. - An apparatus for waste treatment, particularly for solid urban waste and assimilable industrial waste, provided with a pressure tank (21) inside which the waste is subjected to pressure and temperature conditions that are greater than atmospheric conditions, and is conveyed from an upper inlet opening (23) to a lower outlet opening (24) of the pressure tank, **characterized in that** it is provided with two systems (100) according to claim 9 for introducing and extracting the waste to be treated and the treated waste, respectively, the lower opening (4') of the lower device (1') of the first system being connected to the upper inlet opening of the pressure tank and the upper opening of the upper device of the second system connected to the lower outlet opening of the pressure tank.

## Patentansprüche

1. Vorrichtung (1) zur Regelung des Durchgangs von Materialien zu einem Raum oder einer Leitung, besonders geeignet für haftende oder klebrige Materialien, umfassend:
- einen hohlen Hauptkörper (2), welcher mit einer oberen Öffnung und mit einer unteren Öffnung (4) versehen ist, wobei die obere Öffnung ein Zugangsloch (3) bildet, welches mit einem Verschlussdeckel (5) gedeckt werden kann;
- einen klappbaren Verschlussdeckel, welcher eine geschlossene Stellung, die das Zugangsloch deckt, und eine offene Stellung annehmen kann, wobei der Deckel auf eine der inneren Wände des Hauptkörpers geklappt wird, eine innere Seite (6) in dem Deckel unterschieden wird, die genannte innere Seite (6) zum Inneren des Hauptkörpers ausgerichtet ist, wenn der Deckel die geschlossene Stellung annimmt, und wobei eine äußere Seite (7) unterschieden wird, die der Ersten gegenüberliegt; und
- erste Reinigungsmittel (8) für die äußere Seite (7) des Deckels (5);
wobei die ersten Reinigungsmittel (8) zwischen einer ruhenden Stellung, in welcher sie den Durchgang von Materialien durch den Hauptkörper (2) ermöglichen, und einer operativen Reinigungsstellung, in welcher die ersten Reinigungsmittel (8) an der äußeren Seite (7) des Deckels (5) nebeneinandergestellt sind, verlagerbar sind, wobei die Reinigungsmittel (8) mit Kratzelementen (9) versehen sind, die dazu vorgesehen sind, die Materialreste, die an der äußeren Seite (7) des Deckels (5) haften können durch Reibung zu entfernen, wenn die Reinigungsmittel (8) die operative Stellung annehmen und um die Welle der Reinigungsmittel (8) rotieren;
**dadurch gekennzeichnet, dass** die ersten Reinigungsmittel eine rotierende Reinigungsscheibe umfassen, welche sich in der operativen Reinigungsstellung befindet, wenn der Deckel (5) die offene Stellung annimmt.

2. Vorrichtung (1) nach dem vorhergehenden Anspruch, **dadurch gekennzeichnet, dass** die Kratzelemente (9) von einem oder mehreren keilförmigen Körpern gebildet sind, wobei die Grundflächen derselben auf der Seite der Reinigungsscheibe (8) angeordnet sind, die zur äußeren Seite (7) des Deckels (5) ausgerichtet ist, wobei die Keile tangential zur Kontur der genannten Seite der Reinigungsscheibe angebracht sind.

3. Vorrichtung (1) nach Anspruch 1 oder 2, **dadurch gekennzeichnet, dass** die Kratzelemente (9) aus Rotguss gefertigt sind.

4. Vorrichtung (1) nach einem der vorhergehenden Ansprüche, **dadurch gekennzeichnet, dass** die ersten Reinigungsmittel eine Betriebsstange (10) der Reinigungsscheibe (8) umfassen, welche mit der hinteren Seite der Letzten verbunden ist und mit der Abtriebswelle eines Rotationsmotors (11) mittels einer magnetischen Kopplung (12) gekoppelt ist, wobei alle so ausgebildet sind, dass die Stange zwischen einer ersten Stellung, in welcher die Reinigungsscheibe die ruhende Stellung annimmt, und einer zweiten Stellung, in welcher die Reinigungsscheibe die operative Stellung annimmt, und umgekehrt, longitudinal verlagerbar ist, und eine Rotationsbewegung zur Reinigungsscheibe überträgt, wenn der Rotationsmotor betrieben wird.

5. Vorrichtung (1) nach einem der vorhergehenden Ansprüche, **dadurch gekennzeichnet, dass** sie Schwenkmittel umfasst, welche nach dem Zugangsloch (3) angeordnet sind, mittels welchen der Deckel (5) mit dem Inneren des Hauptkörpers (2) gelenkig verbunden ist, wobei die genannten Schwenkmittel aus einem Arm (14) gebildet sind, dessen erstes Ende mit dem Hauptkörper gelenkig verbunden und dessen zweites Ende mit der inneren Seite des Deckels verbunden sind, wobei der Deckel um das erste Ende des Arms schwenken kann, um von der offenen Stellung zur geschlossenen Stellung und umgekehrt zu gehen, wenn der Arm um seine gelenkige Verbindung mit dem Hauptkörper rotiert.

6. Vorrichtung (1) nach einem der vorhergehenden Ansprüche, **dadurch gekennzeichnet, dass** der Hauptkörper (2) an einer seiner inneren Wänden und unter dem Zugangsloch mit einer Aufnahme (15) versehen ist, welche dazu geeignet ist den Deckel (5) aufzunehmen, wenn der Letzte die offene Stellung annimmt.

7. Vorrichtung (1) nach Anspruch 7, **dadurch gekennzeichnet, dass** sie zweite Reinigungsmittel zur Reinigung von Materialresten umfasst, die sich in der Aufnahme (15) der inneren Wand des Hauptkörpers (2) ansammeln können, wobei die genannten zweiten Reinigungsmittel aus einem starren Körper (16) gebildet sind, welcher an dem Boden der Aufnahme angeordnet ist und, mittels Druckelemente (17), von dem Boden der Aufnahme zur Projektion der unteren Öffnung (4) des Hauptkörpers verlagerbar ist, wobei mit seiner Bewegung die in der genannten Aufnahme angesammelte Materialreste mitgenommen werden.

8. Vorrichtung (1) nach einem der vorhergehenden Ansprüche, **dadurch gekennzeichnet, dass** sie mit mindestens einem Haltekörper (18) versehen ist, der hinter der inneren Oberfläche der Wand des Hauptkörpers (2) untertauchbar ist und von entsprechenden Betriebsmitteln betrieben werden kann, die diesen von einer gestreckten Stellung, in welcher er von der inneren Oberfläche der genanten Wand ragt, um den Deckel in der geschlossenen Stellung zu halten, zu einer untertauchten Stellung, in welcher der genannte Haltekörper hinter der inneren Oberfläche der Wand des Hauptkörpers ganz oder teilweise versteckt ist, verlagert, um den Deckel (5) von seiner geschlossenen Stellung zu befreien.

9. System (100) zur Einführung und Entnahme von Materialien, besonders von festem Haushaltsabfall oder angleichbaren Industrieabfall, vom Inneren eines Druckbehälters (21) oder eines Autoklavs, **dadurch gekennzeichnet, dass** es mindestens zwei Vorrichtungen (1, 1') nach einem der Ansprüche 1 bis 8 umfasst, die überlagert und durch ein rohrförmiges Element (22) miteinander angeschlossen angeordnet sind, wobei das offene obere Ende des rohrförmigen Elements mit der unteren Öffnung (4) der oberen Vorrichtung (1), und das offene untere Ende des rohrförmigen Elements mit dem Zugangsloch (3') der unteren Vorrichtung (1') gekoppelt sind, wobei die Deckel (5, 5') der genannten Vorrichtungen eine dichte Kammer bestimmen, in welcher die aufgenommene Materialien mit Druck beaufschlagt werden oder denen der Druck herabgesetzt wird, bevor sie jeweils in den Behälter eingeführt oder nach außen ausgestoßen werden, mittels Öffnung des Verschlussdeckels der unteren Vorrichtung.

10. Gerät zur Abfallbehandlung, besonders für festen Haushaltsabfall und angleichbaren Industrieabfall, welches mit einem Druckbehälter (21) versehen ist, in welchem der Abfall einem Druck und Temperaturbedingungen ausgesetzt wird, die größer als die atmosphärische Bedingungen sind, und von einer oberen Eintrittsöffnung (23) zu einer unteren Austrittsöffnung (24) des Druckbehälters befördert wird, **dadurch gekennzeichnet, dass** es jeweils mit zwei Systemen (100) nach Anspruch 9 zur Einführung und Entnahme des zu behandelnden Abfalls und des behandelten Abfalls versehen ist, wobei die untere Öffnung (4') der unteren Vorrichtung (1') des ersten Systems mit der oberen Eintrittsöffnung des Druckbehälters und die obere Öffnung der oberen Vorrichtung des zweiten Systems mit der unteren Austrittsöffnung des Druckbehälters angeschlossen sind.

## Revendications

1. Dispositif (1) pour réguler le passage de matériaux dans une enceinte ou conduite, spécialement approprié pour matériaux adhérents ou collants, comprenant :
- un corps principal creux (2) pourvu d'une ouverture supérieure et d'une ouverture inférieure (4), l'ouverture supérieure constituant un orifice d'accès (3) susceptible d'être couvert par un couvercle de verrouillage (5) ;
- un couvercle de verrouillage pivotant, susceptible d'adopter une position fermée, couvrant l'orifice d'accès, et une position ouverte, le couvercle étant pivoté sur une des parois intérieures du corps principal, une face intérieure (6) étant distinguée dans le couvercle, ladite face intérieure (6) étant orientée vers l'intérieur du corps principal lorsque le couvercle adopte la position fermée, et une face extérieure (7), opposée à la précédente ; et
- un premier moyen de nettoyage (8) pour la face extérieure (7) du couvercle (5) ; de la sorte le premier moyen de nettoyage (8) est déplaçable entre une position inopérante, dans laquelle il permet le passage de matériaux à travers le corps principal (2), et une position de nettoyage opérative, dans laquelle le premier moyen de nettoyage (8) est juxtaposé à la face extérieure (7) du couvercle (5), le moyen de nettoyage (8) étant pourvu d'éléments de grattage (9) destinés à éliminer par friction les résidus de matériaux pouvant s'avoir adhéré à la face extérieure (7) du couvercle (5) lorsque le moyen de nettoyage (8) adopte la position opérative y tourne autour de l'arbre du moyen de nettoyage (8) ;
**caractérisé en ce que** le premier moyen de nettoyage comprend un disque de nettoyage rotatif qui est dans la position de nettoyage opérative lorsque le couvercle (5) adopte la position ouverte.

2. Dispositif (2) selon la revendication précédente, **caractérisé en ce que** les éléments de grattage (9) sont formés par un ou plusieurs corps sous forme de coin dont les bases sont disposées sur la face du disque de nettoyage (8) orientée vers la face extérieure (7) du couvercle (5), les coins étant situés tangents au contour de ladite face du disque de nettoyage.

3. Dispositif (1) selon la revendication 1 ou 2, **caractérisé en ce que** les éléments de grattage (9) sont réalisés en bronze à canon.

4. Dispositif (1) selon l'une quelconque des revendications précédentes, **caractérisé en ce que** le premier moyen de nettoyage comprend une tringle de commande (10) du disque de nettoyage (8), fixée à la face arrière de ce dernier et couplée à l'arbre de sortie d'un moteur rotatif (11) à travers un accouplement magnétique (12), le tout configuré de manière à ce que la tringle puisse se déplacer longitudinalement entre une première position, dans laquelle le disque de nettoyage adopte la position inopérante, et une deuxième position, dans laquelle le disque de nettoyage adopte la position opérative, et vice-versa, et transmet un mouvement de rotation au disque de nettoyage lorsque le moteur est en fonctionnement.

5. Dispositif (1) selon l'une quelconque des revendication précédentes, **caractérisé en ce qu'**il comprend des moyens pivotants disposés après l'orifice d'accès (3) au moyen desquels le couvercle (5) est fixé de manière articulée à l'intérieur du corps principal (2), lesdits moyens pivotants étant constitués d'un bras (15) dont la première extrémité est fixée de manière articulée au corps principal et la deuxième extrémité est fixée à la face intérieure du couvercle, le couvercle étant susceptible de pivoter autour de la première extrémité du bras afin de passer de la position ouverte à la position fermée et vice-versa, lorsque le bras tourne autour de sa fixation articulée avec le corps principal.

6. Dispositif (1) selon l'une quelconque des revendications précédentes, **caractérisé en ce que** le corps principal (2) est pourvu dans une de ses parois intérieurs et sous l'orifice d'accès d'un logement (15) approprié pour loger le couvercle (5) lorsque ce dernier adopte la position ouverte.

7. Dispositif (1) selon la revendication 7, **caractérisé en ce qu'**il comprend un deuxième moyen de nettoyage pour nettoyer les résidus de matériaux pouvant s'accumuler dans le logement (15) de la paroi intérieure du corps principal (2), ledit deuxième moyen de nettoyage étant constitué d'un corps rigide (16) disposé au fond du logement et déplaçable, par des moyens de poussée (17), depuis le fond du logement jusqu'à la projection de l'ouverture inférieure (4) du corps principal, en entrainant dans son mouvement les résidus de matériaux accumulés dans ledit logement.

8. Dispositif (1) selon l'une quelconque des revendication précédentes, **caractérisé en ce qu'**il est pourvu d'au moins un corps de rétention (18), qui peut s'enfoncer derrière la surface intérieure de la paroi du corps principal (2), commandable par des moyens de commande correspondants le déplaçant d'une position étendue, dans laquelle il fait saillie de la surface intérieure de ladite paroi pour retenir le couvercle dans la position fermée, à une position enfoncée, dans laquelle ledit corps de rétention est complètement ou partiellement caché derrière la surface intérieure de la paroi du corps principal, pour libérer le couvercle (5) de sa position fermée.

9. Système (100) pour introduire et extraire des matériaux, en particulier des déchets urbains solides ou des déchets industriels assimilables, de l'intérieur d'un réservoir de pression (21) ou autoclave, **caractérisé en ce qu'**il comprend au moins deux dispositifs (1, 1') selon l'une quelconque des revendications 1 a 8 disposés superposés et reliés l'un à l'outre au moyen d'un élément tubulaire (22), l'extrémité supérieure ouverte de l'élément tubulaire étant couplée à l'ouverture inférieure (4) du dispositif supérieur (1), et l'extrémité inférieure ouverte de l'élément tubulaire à l'orifice d'accès (3) du dispositif inférieur (1'), les couvercles (5, 5') desdits dispositifs déterminant une chambre étanche à l'intérieur de laquelle les matériaux logés peuvent être pressurisés ou dépressurisés avant d'être introduits dans le réservoir ou expulsés à l'extérieur, respectivement, au moyen de l'ouverture du couvercle de verrouillage du dispositif inférieur.

10. Appareil pour le traitement de déchets, en particulier de déchets urbains solides et déchets industriels assimilables, pourvu d'un réservoir de pression (21) à l'intérieur duquel les déchets sont soumis à des conditions de pression et température qui sont supérieures aux conditions atmosphériques, et sont transportés d'une ouverture d'entré supérieure (23) à une ouverture de sortie inférieure (24) du réservoir de pression, **caractérisé en ce qu'**il est pourvu de deux systèmes (100) selon la revendication 9 pour introduire et extraire les déchets à traiter et les déchets traités, respectivement, l'ouverture inférieure (4') du dispositif inférieur (1') du premier système étant reliée à l'ouverture d'entrée supérieure du réservoir de pression et l'ouverture supérieure du dispositif supérieur du deuxième système étant reliée à l'ouverture de sortie inférieure du réservoir de pression.
